Europäisches Patentamt

European Patent Office

Office européen des brevets

(19)

(11) Publication number: 0 196 384
A2

# (12) EUROPEAN PATENT APPLICATION

(21) Application number: 85306552.2

(22) Date of filing: 16.09.85

(51) Int. Cl.⁴: G11B 5/60

(30) Priority: 01.04.85 US 718311

(43) Date of publication of application:
08.10.86 Bulletin 86/41

(84) Designated Contracting States:
DE FR GB NL

(71) Applicant: MAGNETIC PERIPHERALS INC.
8100-34th Avenue South
Minneapolis Minnesota 55440(US)

(72) Inventor: Dahlgren, Robert Paul
1902 West Michigan
Phoenix Arizona 85023(US)

(74) Representative: Caro, William Egerton et al
J. MILLER & CO. Lincoln House 296-302 High
Holborn
London WC1V 7JH(GB)

(54) Calibration standard for flying height testers and method of manufacturing same.

(57) A calibration standard for calibrating flying height testers by simulating predetermined flying height characteristics of magnetic heads comprises a substrate (30), a reflective layer (34) supported by a surface (32) of the substrate, and a transparent layer (36) disposed over the reflective layer. The transparent layer has an upper surface (38) arranged at an acute angle (α) to the reflective layer, the acute angle representing a predetermined flying angle of a magnetic head over a disk. An optical reference is carried by the transparent layer (36) on the upper surface a finite distance from the reflective layer (34) as measured perpendicular to the upper surface. This finite distance represents a predetermined flying height (d) of a magnetic head over a disk.

Fig.2

## CALIBRATION STANDARD FOR FLYING HEIGHT TESTERS AND METHOD OF MANUFACTURING SAME

This invention relates to calibration standards for flying height testers and to methods of manufacturing the same. In particular the present invention relates to calibration standards for calibrating flying height testers used to test flying height characteristics of magnetic heads.

It is common to use read/write heads which "fly" over the surface of a rotating disk. Aerodynamic surfaces on the head react against the air moved with the rotating disk causing the head to "fly" a small distance from the disk surface. In the manufacture of such heads, it is common to test the aerodynamic characteristics of the head so that the flying height characteristics are known, thereby avoiding use of heads which "fly" too high or too low in relation to the disk surface or at an improper angle to the disk.

Flying height testing is ordinarily accomplished by means of a flying height tester using optical interference techniques. Such a flying height tester comprises, for example, a monochromatic light source such as a tunable monochromator directing monochromatic light at a glass disk. The glass disk is rotated at speeds simulating the rotation of a magnetic disk, and a head/arm assembly being tested is positioned in a holder or clamp in flying relation to the revolving glass disk. Monochromatic light is directed at the disk at a predetermined angle to the surface thereof. Light is reflected from the surface of the disk closest to the flying head, and from the surface of the flying head itself, and impinges onto a sensor, such as a television camera or other light sensitive sensor. With the head in its flying position, monochromatic light reflected from the disk and from the head impinge upon the sensor in additive - (constructive interference) and substractive (destructive interference) modes to create a pattern of bright and dark sectors, the sectors being bounded by "fringes" as they are known in the industry. The distance between the fringes is representative of the angle between the head and the disk and the position of the fringes relative to the image of the edge of the head is representative of the distance, or flying height, between the head and the disk. A computer, such as a Hewlett-Packard HP-85 computer, programmed to receive data from the flying height tester, can calculate the perceived flying height and angle of the head using the detected fringe pattern distances. For further details concerning flying height testers using optical interference techniques, see "Techniques for the Measurement of Air-Bearing Separations -A Review" by C. Lin, IEEE Transactions on Magnetics, Vol. MAG-9, No. 4, pages 673-677 - (December 1973).

In the past, calibration of flying height testers has been accomplished through the use of a standard head whose characteristics are known. However, arm flight characteristics, gimble spring characteristics, etc., of the standard head change after repeated use and abuse. Further, dust, skin oil and other foreign matter may alter the flying characteristics and/or reflective surface of the standard head, altering the calibration of the standard head. Because the flying orientation of a head is in part affected by the speed, radius, and stacking height of the magnetic disk, the actual field conditions of a head could not be duplicated, and it was necessary that heads be accepted that have characteristics within given acceptable ranges. Calibration of production heads could only be accomplished in relation to the calibration of the flying height tester by a given standard; the standard could not be calibrated in absolute terms. It was not possible to calibrate heads on different flying height testers with any degree of accuracy.

The present invention seeks to provide a calibration standard for flying height testers which permits calibration in absolute terms, rather than in relative terms so production heads can themselves be measured in absolute terms, and which is insensitive to disk velocity, tilt or contamination and which is easily used without significant modification to the test procedure or equipment and in particular so that it is not necessary to remove the tester glass disk during calibration. The present invention also seeks to improve the calibration technique for flying height tests so that a plurality of such testers may be standardised in relationship to each other.

According to one aspect of the present invention there is provided a calibration standard for calibrating flying height testers by simulating predetermined flying characteristics of a magnetic head characterised by comprising: a substrate; a reflective layer supported by a surface of said substrate; a transparent layer disposed over said reflective layer, said transparent layer having an upper surface arranged at an acute angle to said reflective layer, said acute angle representing a predetermined flying angle of a magnetic head over a disk; and optical reference means carried by said transparent layer on said upper surface a finite distance from said reflective layer as measured perpendicular to the upper surface, said finite distance representing a predetermined flying height of a magnetic head over a disk.

Said transparent layer preferably has a side normal to said upper surface and said optical reference means comprises an edge intersecting said side and said upper surface.

According to another aspect of the present invention there is provided a method of manufacturing a calibration standard for calibrating flying height testers characterised by comprising the steps of depositing a layer of reflective material onto a surface of a substrate; depositing a layer of transparent material over said reflective layer; grinding opposite, substantially parallel surfaces at a predetermined angle to said reflective layer, said angle representing a predetermined flying angle of a magnetic head; and etching said transparent layer normal to the ground surface of said transparent layer to define a predetermined flying height by the minimum thickness of the transparent layer.

The invention is illustrated, merely by way of example, in the accompanying drawings, in which:-

Figure 1 is a diagrammatic view, in cutaway cross-section, of a conventional flying height tester for measuring flying height characteristics of a magnetic head;

Figure 2 is a diagrammatic view, in cutaway cross-section of a calibration standard according to the present invention for calibrating flying height testers; and

Figures 3A to 3F illustrate a method of manufacturing the calibration standard illustrated in Figure 2.

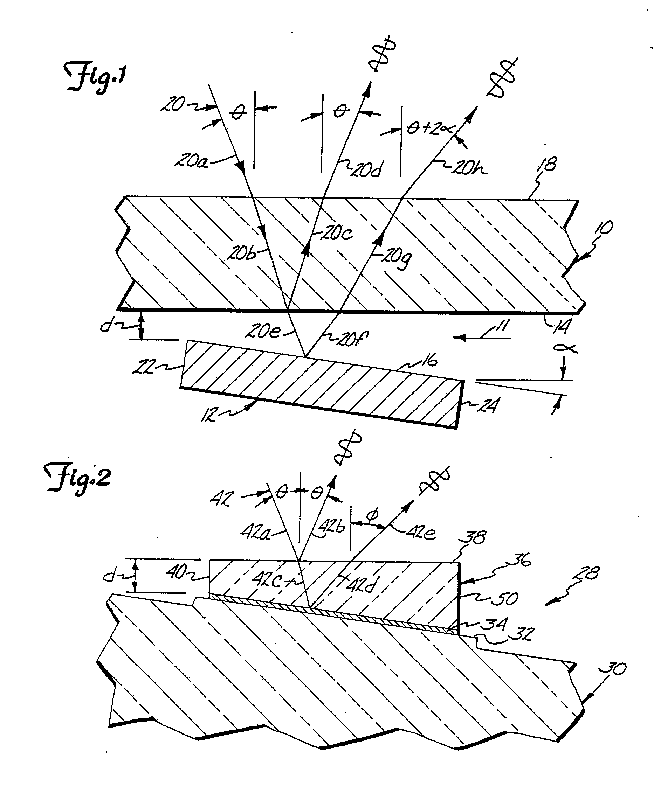

Referring to the drawings, and in particular to Figure 1, there is illustrated a magnetic head and a disk of a flying height tester, as is used in testing production heads for flying height characteristics and also is used in calibrating such testers in accordance with the prior art. As shown in Figure 1, a transparent disk 10, such as a glass disk, is rotated about its axis (not shown) so that a magnetic head 12 flies a short distance from a surface 14 of the disk 10 due to air flowing in the direction of arrow 11 caused by rotation of the disk 10. Monochromatic light from a source, such as a tunable monochromator (not shown), is directed along a path through the disk 10 to reflect off the surface 14 of the disk and a surface 16 of the head 12 to be reflected onto a sensor (not shown). Specifically, monochromatic light impinges on the disk 10 at an incident angle $\theta$ to a surface 18 and follows a path 2a to the surface 18 of the disk 10, a path 20b through the disk, is split and partially reflected from the surface 14 to follow a path 20c through the disk and thereupon a path 20d to a sensor (not shown). A proportion of the light follows a path 20e to reflect off the surface 16 of the head 12 to follow a path 20f through the surface 14 of the disk, a path 20g through the disk and a path 20h to the sensor. The slight angular deviations of the interface between air and the disk are caused by the Snell effect. It should be noted that the paths 20a,20d are each oriented at an angle $\theta$ from the vertical - (normal to the plane of the surfaces 18 and 14) and the path 20h is not parallel to the path 20d but instead is at an angle $\theta + 2\alpha$ to the vertical, where the angle $\alpha$ is the angle of orientation of the flying head.

The path 20a represents only one of numerous parallel paths of light used in the flying height tester. The sensor, therefore, will receive light from the paths 20d,20h of each of the numerous paths 20a. As a result, the received light will include, at any given location on the sensor, light from a path 20d from one beam and light from a path 20h from another beam. The result is that the light from paths 20d,20h is additive and subtractive in accordance with the differences in the respective path length (caused by the flying height distance and angle), so segments of bright and dark light appear to the sensor. Therefore, the sensor will view a reflective pattern consisting of optical wavefronts, or fringes, in the colour of the monochromatic light, the wavefronts separating approximately equal segments of bright and dark and reflected light portions. The reflective light pattern across the entire magnetic head, from a surface 22 to a surface 24, will be viewed by the sensor. The distance bewteen the fringes is representative of the angle $\alpha$ of orientation of the magnetic head, and the position of the fringe pattern relative to the edges of the image of the head caused by the surfaces 22,24 is representative of the distance $\underline{d}$ of the magnetic head to the surface 14 of the disk. Consequently, by measuring the distance between the pattern and the perceived edge of the head, and by measuring the distance between the fringes, the orientation angle $\alpha$ and the flying height $\underline{d}$ can be calculated, assuming that the incident angle $\theta$ and the wavelength of the monochromatic light are known.

In the past, flying height testers were calibrated using a standard head whose flying height characteristics were known to be adequate. However, the absolute characteristics of the standard head were not known. Production heads were tested with the calibrated flying height tester, but production heads could only be tested in relation to the "standard" established by the standard head, not in absolute terms. Repeated use of the standard head often altered its characteristics, thereby causing changes in the calibration of the flying height tester. Furthermore, it was not possible to calibrate relatively production heads tested by different flying height testers.

The present invention concerns a method and apparatus for standardising the calibration of a flying height tester. As shown in Figure 2, a calibration standard 28 according to the present invention comprises a transparent substrate 30, such as of glass, having a surface 32 on which is partially deposited a reflective coating or layer 34, such as a thin layer of chrome. The layer 34 is deposited on the surface 32, and a glass layer 36 is deposited over the layer 34, the layer 36 having an upper surface 38 at an angle $\alpha$ to the surface 34, representative of a predetermined flying angle of a magnetic head. The layer 36 has a thickness established by the height of a surface 40 equal to a desired standard flying height. For example, the height of the surface 40 may be of the order of 0.25 microns, approximately equal to the dimension $\underline{d}$ in Figure 1.

To calibrate a flying height tester using the calibration standard illustrated in Figure 2, the calibration standard 28 is positioned in the flying height tester. The disk is maintained a distance from the calibration standard 28 greater than the coherence length of light so that it does not optically interfere with the fringe pattern on the sensor: it is not necessary to remove the disk, nor to rotate it during calibration. Monochromatic light is directed at the standard 28 along a path 42. Particularly, light impinges on the surface 38 at an angle $\theta$ and follows a path 42a to the surface 38 of the layer 36 where it is divided, and partially reflected at the angle $\theta$ along a path 42b to the sensor (not shown). The remaining light follows a path 42c, at a slight angle to the path 42a, due to the Snell effect, is reflected from the surface 34, through the layer 36 following a path 42d, and directed at the sensor at angle $\phi$ via a path 42e. The surface 38 is equivalent to the reflecting surface 14 of the disk in Figure 1, and the layer 34 is equivalent to the surface 16 of the head 12 in Figure 1. As will be more fully explained hereinafter, it is important to note that angle $\phi$ is not equal to $\theta + 2\alpha$.

Due to the additive and subtractive nature of the reflected light following overlapping paths 42b,42e segments of high intensity monochromatic light will be reflected separately by dark segments with wavefronts or "fringes" of monochromatic light. Using light reflected from the calibration standard 28, the flying height tester may be calibrated, and the heads may thereafter be tested (as illustrated in the procedure shown in Figure 1). Magnetic heads so calibrated will be absolutely calibrated. In operations where a plurality of flying height testers are utilised, a separate calibration standard may be used for each tester. Since the height 40 of each calibration standard is absolutely known, the relative height of the calibration standards are calibrated and the absolute flying height of each production head can be readily ascertained.

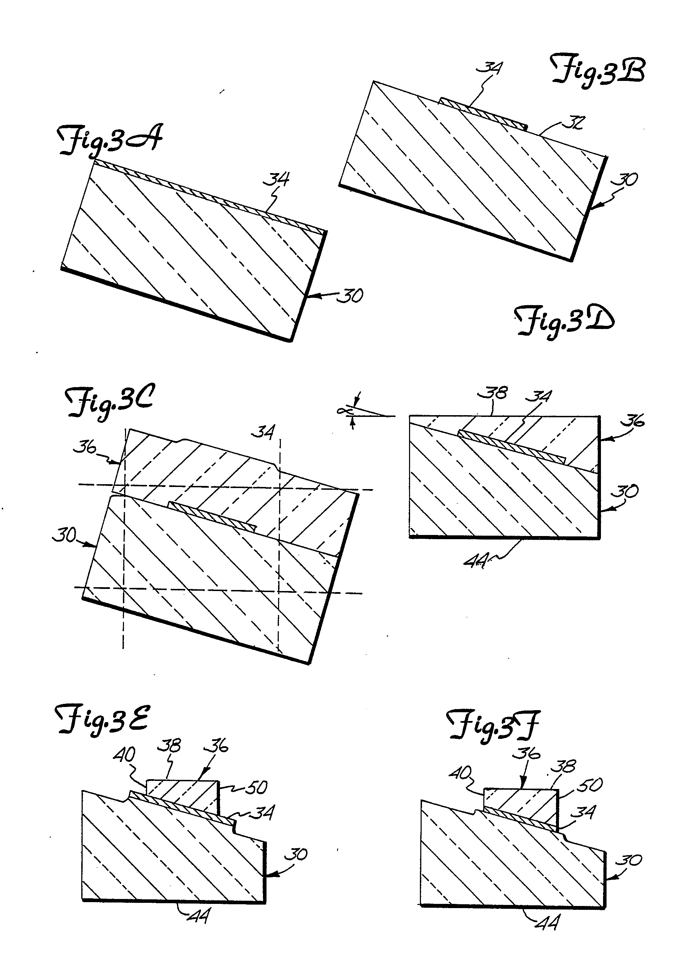

Figures 3A to 3F illustrate a method of manufacture of the calibration standard 28 illustrated in Figure 2. The transparent substrate 30 has the layer 34 of chrome sputter deposited onto an upper surface thereof. The layer 34 is thereupon etched back to a rectangular configuration illustrated in Figure 3B, visually duplicating a head surface. The layer 36 of glass is deposited over the substrate 30 and the layer 34 as shown in Figure 3C. Although Figures 3A to 3C illustrate the calibration standard in its final angular configuration, it is understood that the deposit of the layers 34,36 is accomplished in a more conventional orientation during manufacture. The substrate 30 and the layer 36 are thereafter lapped at their upper surface 38 at an angle $\alpha$ representative of the flying angle of a magnetic head: a lower surface 44 thereafter being ground approximately parallel to the surface 38 and at the desired angle $\alpha$ to the surface of the layer 34. Thereafter, excess overcoat is etched away leaving the configuration illustrated in Figure 3E with the layer 36 deposited on the layer 34 with the layer 34 extending beyond the bounds of the layer 36. Etching the layer 36 ordinarily also etches the exposed portions of the substrate 30, as shown. After testing the calibration standard to be certain that the surface 38 is flat, the height of the surfaces 40,50 are measured (such as with a stylus profilometer), and the angle $\alpha$ is precisely measured. Data reflecting the heights of the surfaces 40,50 and of the angle $\alpha$ are recorded (such as by etching perceivable data onto a chrome layer deposited for that purpose or onto an appropriate location of the substrate 30). Thereafter, excess of the layer 34 extending beyond the surfaces 40,50 is etched away, leaving the completed standard as shown in Figure 3F. The surface 38 of the layer 36 and the substrate 30 represents the plane of the disk, and the surface 40 represents the absolute height of the calibration standard 28. The height of the surface 40 is measured in absolute terms, so production heads can be calibrated with the calibration standard in absolute terms.

With reference to Figure 1, it can be shown that the light reflected along the path 20$h$ is 180° out of phase relative to that reflected along the path 20 $d$. Further, it can be shown that the effects of the Snell effect are self-cancelling, resulting in the fact that the path 20$e$ is parallel to the path 20$a$ and the angle of the light path 28 is equal to the incident angle plus twice the head orientation angle ($\theta$ + 2$\alpha$). Therefore, whether testing production heads with the flying height tester or calibrating it in accordance with the prior art, the same algorithms are used, accounting for the 180° phase shift, with the Snell effect not considered because it is self-cancelling. However, with the calibration standard 28, the algorithms must be altered in at least three aspects; first, unlike the conditions of Figure 1, the light reflected on the path 42$c$ is in phase relative to the light reflected along the path 42$a$; second, the Snell effect affects the angle $\phi$ orientation of the path 42$a$ and in particular, the angle $\phi$ is not equal to $\theta$ + 2$\alpha$ as in Figure 1, due to changes to the Snell angle caused by differences in interfacing media; and third, the index of refraction of glass, being greater than air, must be taken into account. As a result, when using the calibration standard 28 according to the present invention, the algorithms for calibrating the flying height tester should compensate for the effects of the Snell angle, the index of refraction, and the phase relationship of the paths 42$b$,42$a$.

The present invention thus provides a calibration standard for calibrating flying height testers which is more reliable than past standards, is rugged in use, and provides accurate calibration in absolute terms. The calibration standard is easily used, with little change in calibration procedures, and provides an effective calibration standard for absolute calibration of flying height testers.

## Claims

1. Calibration standard for calibrating flying height testers by simulating predetermined flying characteristics of a magnetic head characterised by comprising: a substrate (30); a reflective layer (34) supported by a surface (32) of said substrate; a transparent layer (36) disposed over said reflective layer, said transparent layer having an upper surface (38) arranged at an acute angle ($\alpha$) to said reflective layer, said acute angle representing a predetermined flying angle of a magnetic head over a disk; and optical reference means carried by said transparent layer (36) on said upper surface a finite distance from said reflective layer (34) as measured perpendicular to the upper surface, said finite distance representing a predetermined flying height (d) of a magnetic head over a disk.

2. A calibration standard as claimed in claim 1 characterised in that said transparent layer has a side (40) normal to said upper surface (38) and said optical reference means comprises an edge intersecting said side and said upper surface.

3. A method of manufacturing a calibration standard for calibrating flying height testers characterised by comprising the steps of depositing a layer (34) of reflective material onto a surface of a substrate (30); depositing a layer of transparent material (36) over said reflective layer; grinding opposite, substantially parallel surfaces at a predetermined angle ($\alpha$) to said reflective layer, said angle representing a predetermined flying angle of a magnetic head; and etching said transparent layer normal to the ground surface of said transparent layer to define a predetermined flying height (d) by the minimum thickness of the transparent layer (36).

*Fig.1*

*Fig.2*

Fig.3A

Fig.3B

34

32

30

34

30

Fig.3C

Fig.3D

36

34

38

34

36

30

30

44

Fig.3E

Fig.3F

40

38

36

50

34

40

36

38

50

34

30

30

44

44